# EUROPÄISCHE PATENTSCHRIFT

(11) **EP 0 717 932 B1**
(45) Veröffentlichungstag und Bekanntmachung des Hinweises auf die Patenterteilung: **02.05.2002**
(21) Anmeldenummer: 95117759.1
(22) Anmeldetag: 11.11.1995
(51) Int. Cl.: A23G 3/26

(54) **Vorrichtung zur Durchführung eines Filmlackier- und/oder Zuckerdragierverfahrens**
Apparatus for implementation of candying and/or icing process
Installation pour exécuter un procédé de dragéification et/ou glaçage

(30) Priorität: 21.12.1994 DE 4445618
(43) Veröffentlichungstag der Anmeldung: 26.06.1996
(73) Patentinhaber: Gebrüder Lödige Maschinenbaugesellschaft mbH, D-33102 Paderborn (DE)
(72) Erfinder: Meyer, Thomas, D-33106 Paderborn-Wewer (DE)
(74) Vertreter: KOHLER SCHMID + PARTNER

(56) Entgegenhaltungen:
- EP-A- 0 382 160
- DE-A- 3 502 426
- DE-A- 4 005 207
- DE-A- 4 005 208
- DE-U- 8 524 347
- US-A- 4 499 847
- US-A- 4 596 205
- US-A- 4 766 839
- US-A- 4 844 001
- US-A- 5 334 244
- US-A- 5 397 393
- PATENT ABSTRACTS OF JAPAN vol. 018, no. 233 (C-1195), 28. April 1994 (1994-04-28) & JP 06 023258 A (FREUNT IND CO LTD), 1. Februar 1994 (1994-02-01)

## Beschreibung

Die Erfindung geht aus von einer Vorrichtung, insbesondere für die Filmlackierung und/oder die Zuckerdragierung, mit einer ein Überzugsgut aufnehmenden Trommel, deren Innenraum einem Fluidstrom aussetzbar ist, und mit wenigstens einem Verteilerkanal zur Führung eines Luftstromes bis in den Innenraum der Trommel, der als länglicher, den Luftstrom führender Hohlkörper ausgeführt ist, und der sich von der Trommelöffnung bis nahe der Trommelöffnung gegenüberliegenden Trommelwand erstreckt.

Eine derartige Vorrichtung ist aus der DE-OS 40 05 208 bekannt.

Diese Filmlackierungs- und/oder Zuckerdragierungsvorrichtungen werden in der Lebensmittel und/oder pharmazeutischen Industrie bevorzugt zur Herstellung von mit einem Überzug versehenen Dragees eingesetzt. Dazu wird das Überzugsgut, beispielsweise die vorgefertigten Kerne der späteren Dragees, in eine rotierende, partiell perforierte Trommel gegeben. Durch die Rotation der Trommel wird das Überzugsgut einer Umwälz- und Rollierbewegung ausgesetzt, die eine mehr oder weniger starke Vermischung des Überzugsgutes, beispielsweise der Kerne, untereinander hervorruft. Dabei sollen die Umwälz- und Rollierbewegung so ausgebildet sein, daß der Abrieb, d.h., die Scherbeanspruchung des Überzugsgutes, gering gehalten wird.

Während die Trommel rotiert, wird Überzugsgut vermischt und durch eine im Trommelinneren angebrachte Sprühvorrichtung einem Fluidstrom ausgesetzt.

Um einen möglichst gleichmäßigen und glatten Überzug auf den Kernen zu erhalten, sollte die Trocknung der besprühten Kerne möglichst schonend erfolgen und die verfahrensspezifischen Vorgaben berücksichtigen. Die Trocknungsgeschwindigkeit muß dem jeweiligen Prozeß bestmöglichst angepaßt sein, damit beispielsweise Risse in der Beschichtung des Kernes vermieden werden.

Bei der Vorrichtung gemäß der DE-40 05 208 wird der Trommel im Bereich der Beschickungsöffnung eine gerichtete, mantelförmige Gasströmung zugeführt, die zumindest eine Längskomponente bezüglich der Trommelachse aufweist.

Diese Gasströmung wird durch einen sichelartigen Ringspalt an der Trommelöffnung erzeugt. Dadurch legt sich der Gasstrom ringförmig um die Sprühvorrichtung, wobei der größere Anteil der Gasströmung über der Sprühvorrichtung entlangströmt. Dieser größere Teil der Gasströmung verwirbelt teilweise beim Einströmen in das Trommelinnere und wird beim Auftreffen auf die der Trommelöffnung gegenüberliegende Trommelwand in Richtung des Überzugsgutes umgelenkt, wobei weitere Verwirbelungen auftreten.

Der andere, kleinere Teil der Gasströmung trifft auf den Fluidstrom, lenkt diesen teilweise ab und wird verwirbelt, bevor der Fluidstrom diesen Teil des Gasstromes in Richtung des Überzugsgutes ablenkt. Desweiteren strömt das Gas den perforierten Blechen im Bodenbereich der Trommel zu und wird durch die perforierten Bleche hindurch abgesaugt.

Dieser schlecht kontrollierbare und stark verwirbelte Gasstrom führt, über die Trommellänge gesehen, zu unterschiedlichen Wärme- und Stoffaustauschvorgängen und behindert den Fluidstrom. Dies führt zu einer starken Beeinträchtigung des Sprühbildes und zu deutlich aufgewirbeltem Staub, so daß es auf dem Düsenarm und im Trommelstutzen zu starken, in der Lebensmittel- und Pharmaindustrie nicht akzeptablen Belägen kommen kann. Zur Beseitigung dieser Beläge muß die Vorrichtung mehrfach gereinigt werden, was einen inakzeptablen Kostenaufwand und ein ineffektives Produktionsergebnis zur Folge hat.

Aus DE 31 30 166 C1 ist eine Dragiertrommel bekannt, deren Drehachse zumindest annähernd waagerecht ist und die einen zumindest annähernd zylindrischen Rumpf und zwei sich an je einer Seite des Rumpfes anschließende, zumindest annähernd kegelstumpfförmige Stirnwandabschnitte aufweist. Diese Stirnwandabschnitte erstrecken sich in den vom Rumpf umschlossenen Raum hinein und enden in Ringzonen, deren axialer Abstand voneinander erheblich kleiner ist als die Breite des Rumpfes. Parallel zur Drehachse erstrecken sich in die Dragiertrommel hinein ein Zuluftrohr, ein Abluftrohr und eine Sprühmittelleitung. Zuluftrohr und Abluftrohr sind im Bereich zwischen den Ebenen der beiden Ringzonen perforiert und die Sprühmittelleitung ist in diesem Bereich mit Düsen besetzt, durch die ein Sprühmittel, beispielsweise eine Zukkerlösung oder ein Lack, auf ein in der Dragiertrommel enthaltenes Dragiergut aufgesprüht oder in dieses Dragiergut eingesprüht werden kann, während sich die Dragiertrommel dreht. Das als Verteilerkanal funktionierende Abluftrohr ist auf der dem Überzugsgut zugewandten Seite konvex ausgebildet und erstreckt sich um über etwa die Hälfte des Trommelumfangs.

Daher liegt der Erfindung die Aufgabe zugrunde, die eingangs genannte Vorrichtung dahingehend weiterzubilden, daß die Luftströmung den Fluidstrom nicht beeinflußt und möglichst laminar am Gutbett des Überzugsgutes auftrifft.

Diese Aufgabe wird erfindungsgemäß dadurch gelöst, daß die Vorrichtung der eingangs genannten Art dahingehend weitergebildet wird, daß die dem Überzugsgut zugewandte Seite des Verteilerkanales konkav ausgebildet ist, daß sich der Verteilerkanal über etwa ein Fünftel bis ein Drittel, vorzugsweise ein Viertel, des Trommelumfanges erstreckt, und daß der Verteilerkanal auf nahezu der gesamten Fläche seiner dem Überzugsgut zugewandten Seite Luftauslaßöffnungen aufweist.

Die erfindungsgemäße Vorrichtung hat damit den Vorteil, daß der Luftstrom nicht nur bis zur Trommelöffnung, sondern durch die gesamte Trommel hindurch geleitet wird und großflächig, nämlich auf der gesamten Fläche der dem Überzugsgut zugewandten Seite, aus dem Verteilerkanal heraustritt. Durch diese vielen, auf der gesamten Unterseite des Verteilerkanales angeordneten Luftauslaßöffnungen wird es möglich, die Strömungsgeschwindigkeit der Luft im Trommelinneren stark herabzusetzen, ohne dabei den für die Trocknung des Überzugsgutes notwendigen Massenfluß zu verringern. Eine bessere Anpassung der dem Überzugsgut zugewandten Seite des Verteilerkanales an das Gutbett wird dadurch erreicht, daß diese Seite konkav ausgebildet ist und sich über etwa ein Fünftel bis ein Drittel, vorzugsweise ein Viertel, des Tromelumfanges erstreckt.

In einer bevorzugten Ausführungsform der erfindungsgemäßen Vorrichtung weist die dem Überzugsgut zugewandte Seite des Verteilerkanales in etwa dieselbe Größe auf, wie die vom Überzugsgut eingenommene Fläche im Gutbett (Schüttgutspiegel).

Dies hat den Vorteil, daß der Luftstrom bereits so großflächig aus dem Verteilerkanal austritt, daß er, ohne sich weiter ausdehnen zu müssen, das gesamte Gutbett erfassen kann. Dadurch werden die beim Ausdehnen der Luft zwangsläufig auftretenden Verwirbelungen vermieden.

In einer anderen, bevorzugten Ausführungsform ist der Verteilerkanal über dem Sprühdüsenträger angeordnet und liegt dem Gutbett gegenüber. Das Gutbett wird aufgrund der Rotationsbewegung der Trommel aus seiner Lage im unteren Bereich der Trommel in Drehrichtung ein wenig herausbewegt, so daß der dem Gutbett gegenüberliegende Verteilerkanal nicht senkrecht über dem Sprühdüsenträger, sondern in Drehrichtung der Trommel in gleichem Maße ein wenig versetzt angeordnet ist.

Dies hat den Vorteil, daß die aus dem Verteilerkanal austretende Luft auf direktem Wege, d.h., ohne Umwege machen zu müssen, senkrecht auf dem Gutbett auftrifft und somit unnötige Wege und Umlenkungen der Luft, die Verwirbelungen verursachen könnten, vermieden werden.

In einer weiteren, bevorzugten Ausführungsform der Erfindung sind die Luftaustrittsöffnungen so groß, daß die Luft aus dem Verteilerkanal schleichend austritt. Die so erzeugte, schleichende Strömung im Trommelinneren gewährleistet eine laminare und wirbelfreie Strömung der Luft vom Verteilerkanal zum Gutbett, die die Sprühvorrichtung nur unwesentlich verunreinigt, und die den Fluidstrom nicht nennenswert negativ beeinflußt.

In einer bevorzugten Ausführungsform der erfindungsgemäßen Vorrichtung sind im Inneren des Verteilerkanals Leitbleche zur Umlenkung eines Teils des axial verlaufenden Luftstromes in eine radial verlaufende Abströmrichtung vorgesehen, wobei die Leitbleche vorzugsweise mit zunehmender Entfernung von der Trommelöffnung immer größer werden.

Die im Verteilerkanal in axialer Richtung strömende Luft trifft zunächst auf das kleinste der Leitbleche. Dieses kleinste der Leitbleche stellt für einen Teil der axial strömenden Luft einen Strömungswiderstand dar, der den auf ihn treffenden Teil der Luftströmung in eine radiale Strömung umlenkt. Diese radiale Strömung wird dann durch die im Bereich dieses Leitbleches liegenden Luftaustrittsöffnungen aus dem Verteilerkanal heraustreten. Beim nächstgrößeren Leitblech wird wiederum ein Teil des verbleibenden Luftstromes in eine radial aus dem Verteilerkanal herausströmende Strömung umgelenkt usw.. Durch ein geeignetes Dimensionieren der Leitbleche kann somit erreicht werden, daß die im Verteilerkanal axial verlaufende Luftströmung derart durch diese Vielzahl der Leitbleche umgelenkt wird, daß aus jeder Luftaustrittsöffnung nahezu dieselbe Luftmenge mit nahezu derselben Geschwindigkeit austritt.

Dadurch wird im Trommelinneren eine sehr gleichmäßige, großflächige schleichende Luftströmung erzeugt, die sich ohne nennenswerte Verwirbelungen auf das Gutbett legt und den durch den Fluidstrom frisch aufgetragenen Überzug schnell und zuverlässig trocknet.

In einer anderen, bevorzugten Ausführungsform der erfindungsgemäßen Vorrichtung ist die dem Überzugsgut zugewandte Seite des Verteilerkanales als Siebblech mit einer Vielzahl von Luftauslaßöffnungen mit einem Durchmesser von 0,5 bis 5 mm, vorzugsweise 1,5 mm, ausgeführt.

Dies hat den Vorteil, daß die Luftauslaßöffnungen eine schleichende Strömung ermöglichen und daß zur Fertigung des Verteilerkanales vorgefertigte Siebbleche verwendet werden können.

In einer anderen, bevorzugten Ausführungsform der erfindungsgemäßen Vorrichtung vergrößert sich der Öffnungsquerschnitt der Luftauslaßöffnungen mit zunehmender Entfernung von der Trommelöffnung.

Hiermit wird gewährleistet, daß sich der der im Verteilerkanal befindlichen Luftströmung entgegensetzende Strömungswiderstand mit zunehmender Entfernung von der Trommelöffnung immer geringer wird. Damit wird es der Luftströmung immer weiter erleichtert, aus dem Verteilerkanal in radialer Richtung herauszutreten, so daß eine über die gesamte Fläche verteilte, gleichmäßige Strömung im Trommelinneren entsteht.

In einer alternativen Ausführungsform der erfindungsgemäßen Vorrichtung sind die Luftauslaßöffnungen als ein Längsschlitz oder als mehrere Längsschlitze ausgeführt, die sich mit steigender Entfernung von der Trommelöffnung verbreitern. Hiermit ist ebenfalls gewährleistet, daß der Strömungswiderstand mit zunehmender Entfernung von der Trommelöffnung abnimmt und die Luftströmung gleichmäßig aus dem Verteilerkanal heraustritt.

In einer weiteren Ausführungsform erhöht sich die Anzahl der Öffnungen mit zunehmender Entfernung von der Trommelöffnung, um auch hier den Strömungswiderstand zugunsten eines gleichmäßigen Strömungsaustrittes aus dem Verteilerkanal zu senken.

In einer bevorzugten Ausführungsform sind die Strömungskanäle oberhalb der Trommelöffnung angeordnet, damit beim Reinigen der Trommel, des Verteilerkanales und/oder der Sprühvorrichtung kein Spritzwasser in den Strömungskanal gelangen kann.

In einer weiteren, bevorzugten Ausführungsform der erfindungsgemäßen Vorrichtung weist jeder Strömungskanal, der den Luftstrom zum Verteilerkanal hin leitet, an nahezu jeder Stelle einen im wesentlichen gleichen Strömungsquerschnitt auf.

Dadurch ist gewährleistet, daß die zum Verteilerkanal hin geführte Luftströmung bereits laminar und ohne Verwirbelungen bei diesem ankommt.

Wird nun die am Verteilerkanal ankommende, axiale, laminare und nahezu wirbelfreie Luftströmung aufgrund einer oder mehrerer der oben genannten Maßnahmen in eine radiale Strömung umgelenkt, so entsteht im Trommelinneren ebenfalls eine laminare und wirbelfreie Luftströmung.

Aufgrund des großflächigen Luftaustrittes aus dem Verteilerkanal bei gleichzeitiger Gewährleistung des zur Trocknung des Überzugsgutes erforderlichen Massenflusses ist eine Vorrichtung geschaffen, die in der Lage ist, die Dragees mit einem glatten und rißfreien Überzug zu versehen, ohne daß starke Verschmutzungen in der Vorrichtung auftreten.

Die erfindungsgemäße Vorrichtung entspricht damit allen erweiterten Anforderungen, die bei der Herstellung pharmazeutischer Überzüge gestellt werden. Einströmende Fluidmengen werden gut ausgenutzt, indem sie unter idealen Bedingungen dem Gutbett zugeführt werden und ohne daß sie durch den Luftstrom negativ beeinflußt werden. Der Wirkungsgrad von Versprühung und Trocknung ist hoch, so daß neben getakteten auch kontinuierliche Überzugsverfahren störungsfrei durchgeführt werden können. Die Qualität überzogener Kerne wird verbessert, indem die Trocknung wirkungsvoller und effektiver durchgeführt werden kann. Dadurch werden auch Risse im Film oder Bläschenbildung verhindert.

Weitere Vorteile ergeben sich aus der Beschreibung und der beigefügten Zeichnung. Ebenso können die vorstehend genannten und die noch weiter ausgeführten Merkmale erfindungsgemäß jeweils einzeln, für sich oder in beliebigen Kombinationen miteinander verwendet werden. Die erwähnten Ausführungsformen sind nicht als abschließende Aufzählung zu verstehen, sondern haben vielmehr beispielhaften Charakter.

Die Erfindung ist in der Zeichnung dargestellt und wird anhand von Ausführungsbeispielen in der Zeichnung näher erläutert. Es zeigt:
- Fig. 1: eine erfindungsgemäße Vorrichtung zum Filmlackieren und/oder Zuckerdragieren mit einer aus der Vorrichtung ausgefahrenen Sprühvorrichtung;
- Fig. 2: einen schematischen Aufbau einer erfindungsgemäßen Vorrichtung zum Filmlackieren und/oder Zuckerdragieren; und
- Fig. 3: einen schematischen Aufbau der Luftführung in einer Stirnwand einer erfindungsgemäßen Vorrichtung.

Die einzelnen Figuren der Zeichnung zeigen den erfindungsgemäßen Gegenstand teilweise stark schematisiert und sind nicht maßstäblich zu verstehen. Die Gegenstände der einzelnen Figuren sind teilweise stark verkleinert, bzw. vergrößert dargestellt, damit ihr Aufbau besser gezeigt werden kann.

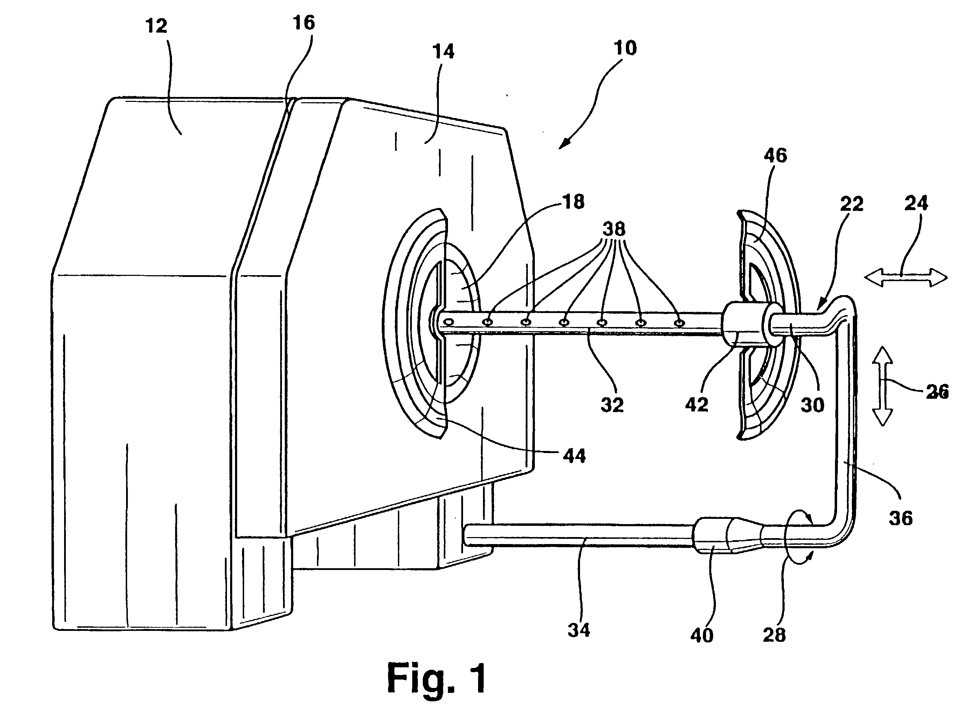

In Fig. 1 ist mit 10 eine Vorrichtung zum Filmlackieren und Zuckerdragieren gezeigt, deren Gehäuse sich aus einem Gehäuseteil 12 und einer Stirnwand 14 zusammensetzt. In dem Gehäuseteil 12 sind unter anderem eine drehbar gehaltene Trommel und die dazu notwendigen Antriebe untergebracht. Die Stirnwand 14 ist zu dem Gehäuseteil 12 verfahrbar und ist in Anlage an dem Gehäuseteil 12 über ein umlaufendes Dichtungselement 16 abgedichtet.

In der Stirnwand 14 ist eine Beschickungsöffnung 18 vorgesehen; die unmittelbar in eine Trommelöffnung einer rotierenden Trommel mündet. Zwischen der Beschickungsöffnung 18 und der Trommelflanschstirnwand ist ein Dichtungselement vorgesehen, das die rotierende Trommel gegenüber der ortsfesten Beschickungsöffnung 18 abdichtet.

Über die Beschickungsöffnung 18 kann eine Sprühvorrichtung 22 in den Innenraum der Trommel verfahren werden. Die Sprühvorrichtung 22 ist in Pfeilrichtung 24 verfahrbar, in Pfeilrichtung 26 absenk- bzw. anhebbar und in Pfeilrichtung 28 verschwenkbar.

Die Sprühvorrichtung 22 weist einen ersten Tragarmabschnitt 30 auf, der einen Sprühdüsenträger 32 drehbar gelagert hält und einen zweiten Tragarmabschnitt 34, der als verfahrbare und verschwenkbare Führungsschiene ausgebildet ist. Über den zweiten Tragarmabschnitt 34 ist die Sprühvorrichtung 22 im Gehäuseteil 12 gehalten. Zwischen dem ersten Tragarmabschnitt 30 und dem zweiten Tragarmabschnitt 34 ist ein mittlerer Tragarmabschnitt 36 ausgebildet, der Leitungen zum Sprühdüsenträger 32 führt.

An dem Sprühdüsenträger 32 sind mit 38 Düsen bekannter Art angedeutet. Die Düsen 38 sind mit Leitungen verbunden, die im ersten Tragarmabschnitt 30 und in dem mittleren Tragarmabschnitt 36 geführt sind und in Anschlüsse eines Verteilers 40 münden. An den Verteiler 40 können flüssigkeits- und/oder gasführende Leitungen angeschlossen werden, über die den Düsen 38 die zu versprühenden Flüssigkeiten und/oder Gase zugeführt werden. Werden beispielsweise Zweistoffdüsen als Düsen 38 verwendet, kann das Gas im ersten, zweiten und mittleren Tragarmabschnitt 30, 34, 36 geführt sein und die flüssigkeitsführenden Leitungen sind an den Sprühdüsenträger 32 von Außen ankoppelbar.

Der Sprühdüsenträger 32 ist über einen Griff 42 in einem Winkelbereich von ca. 30° verdrehbar.

An der Stirnwand 14 ist eine erste Klappe 44 vorgesehen, über die gemeinsam mit einer zweiten Klappe 46 die Beschikkungsöffnung 18 verschließbar ist. Die zweite Klappe 46 ist im Ausführungsbeispiel der Fig. 1 an der Sprühvorrichtung 22 befestigt.

In dem Gehäuseteil 12 ist eine Trommel 48 drehbar gelagert. Die Trommelöffnung ist als Trommelflansch 50 ausgebildet, der mit seiner äußeren Umfangsfläche auf nicht dargestellten Laufrollen aufliegt.

Die Trommel 48 ist an der Rückseite so ausgebildet, daß sie über einen Antrieb antreibbar ist. Die Drehzahl der rotierenden Trommel 48 ist stufenlos änderbar; auch die Laufrichtung der Trommel 48 kann gewählt werden. In bekannter Weise ist an der Trommel 48 eine in der Figur nicht gezeigte Produktauslaßöffnung vorgesehen, über die das umhüllte Gut aus der Trommel 48 in bereitzustellende Behälter nach unten entleert werden kann.

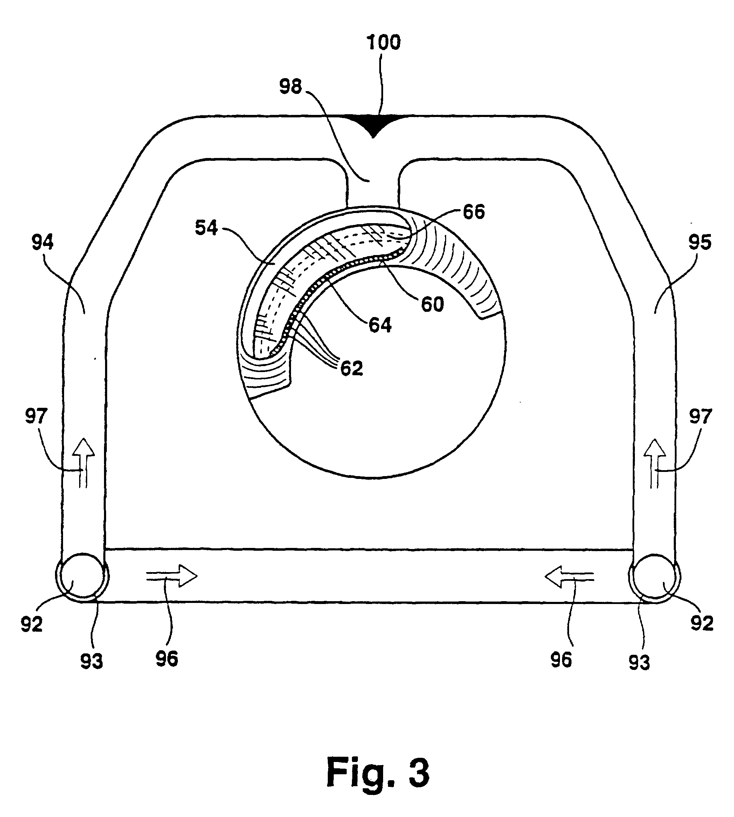

In dem Gehäuseteil 12 ist seitlich ein Luftführungskanal geführt, der an Luftführungskanäle der Stirnwand 14 luftdicht ankoppelbar ist. Über die Luftführungskanäle wird Gas in den Innenraum der Trommel 48 geführt (siehe Fig. 3).

Im Betrieb rotiert die Stirnfläche der Trommel 48 und Luft wird aus dem Gehäuseteil 12 der Vorrichtung kommend der Stirnwand 16 zugeführt. Die Vorrichtung wird so betrieben, daß'im Inneren der Trommel 48 gegenüber dem Atmosphärendruck immer ein geringerer Druck herrscht. Der Unterdruck in der Trommel 48 wird aufgebaut, indem mehr Luft aus der Trommel abgezogen als dieser zugeführt wird.

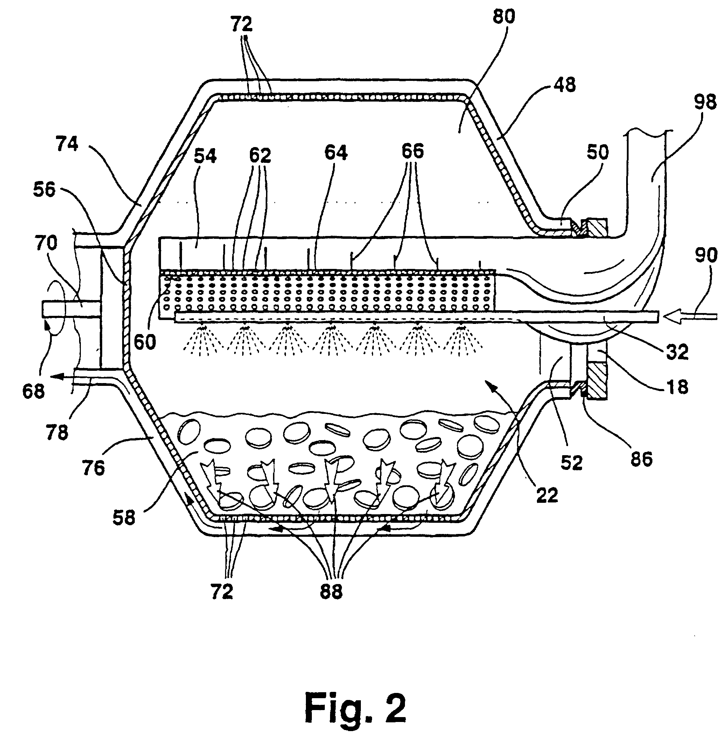

Fig. 2 zeigt stark schematisiert den Aufbau und die Wirkungsweise der erfindungsgemäßen Vorrichtung im Längsschnitt. An der Trommelöffnung 52 ist ein länglicher, hohler Verteilerkanal 54 angeordnet, der in axialer Richtung in die Trommel 48 hineinragt und bis nahe der der Trommelöffnung 52 gegenüberliegenden Trommelwand 56 reicht. Der Verteilerkanal 54 ist zusammen mit der Stirnwand 14 aus der Vorrichtung zum Filmlackieren und Zuckerdragieren herausfahrbar.

Die dem Gutbett 58 zugewandte Seite 60 des Verteilerkanales 54 ist als Siebblech 64 ausgeführt und weist eine Vielzahl von kreisrunden Luftaustrittsöffnungen 62 auf. Diese Luftaustrittsöffnungen 64 haben einen Durchmesser von vorzugsweise 1,5 mm.

Im Inneren des Verteilerkanales 54 sind auf dem Siebblech 64 unterschiedlich große Leitbleche 66 angeordnet. Dabei nimmt die Größe der Leitbleche 66, d.h., deren Höhe und/oder Breite, mit zunehmender Entfernung von der Trommelöffnung 52 zu. Die Leitbleche 66 sind in radialer Richtung angeordnet und sollen jeweils einen Teil der in axialer Richtung ankommenden Luftströmung derart umlenken, daß aus dem Siebblech 62 eine über die Fläche betrachtete gleichmäßige Luftströmung heraustritt.

In einer nicht dargestellten Ausführungsform sind die Leitbleche 66 derart gekrümmt ausgebildet, daß die umzulenkende Teilströmung der Luft laminar und ohne große Verwirbelungen um 90 Grad umgelenkt wird.

Dabei dreht sich die Trommel 48 in Pfeilrichtung 68 um die Achse 70. Am Trommelumfang sind partiell perforierte Segmente 72 vorgesehen über die der durch den Verteilerkanal 54 einströmende Luftstrom aus der Trommel 48 abgeführt werden kann. Unterhalb der perforierten Segmente 72 sind Luftabführungskanäle 74, 76 vorgesehen, über die die Luft aus der Trommel 48 abgesaugt wird. Die Luftabsaugungskanäle 74, 76 sind an der Trommel 48 luftdicht ausgebildet und rotieren mit um die Achse 70. Nur wenn sich das perforierte Segment 72 im Bodenbereich befindet, wird Luft in Pfeilrichtung 78 über das Segment 72 aus dem Innenraum 80 abgesaugt.

In der Figur 2 ist auch der Sprühdüsenträger 32 gezeigt, der ein Teil der Sprühvorrichtung 22 ist. Der Sprühdüsenträger 32 ist in einem Bereich von ca. 32° verstellbar, sodaß der Sprühdüsenträger 32 auf die Lage des Gutbettes 58 der Trommel 48 ausgerichtet werden kann. Ein Sprühstrahl von Düsen 38 wird derart auf das Gutbett 58 gerichtet, daß der Sprühstrahl das Gutbett 58 bestmöglich erfassen kann. Der Verteilerkanal 54 ist dem Gutbette 58 gegenüberliegend angeordnet, damit die ausströmende Luft nahezu senkrecht auf das Gutbett 58 auftrifft.

Wird bei rotierender Trommel 48 und einströmender Luft mehr Luft aus der Trommel 48 abgezogen als ihr zugeführt wird, so entsteht im Trommelinnenraum ein Unterdruck. Dazu ist die gegenüber der Trommel 48 ortsfest angeordnete Beschickungsöffnung 18 gegenüber der Stirnwand 14 der Trommelöffnung 52 mittels eines Dichtringes 86 abgedichtet.

Aufgrund der aus dem Verteilerkanal 54 heraustretenden schleichenden Strömung gelangt die Luftströmung laminar und nahezu wirbelfrei bis zum Gutbett 58. Gleichzeitig wird die Luft aus der Trommel 48 über die Segmente 72 im Bodenbereich der Trommel 48 abgesaugt, d.h., die Luft wird in einer Zwangsströmung, in der Figur mit Pfeil 88 eingezeichnet, durch das Gutbett 58 geführt. Die von den Düsen 38 versprühte Flüssigkeit, die dem Sprühdüsenträger 32 aus Pfeilrichtung 90 zuströmt, wird in derselben Richtung versprüht, wie die Luft aus der Trommel 48 abgezogen wird. Man bezeichnet deshalb dieses Verfahren als Gleichstromverfahren. Die Versprühung der Flüssigkeit ist dem Luftstrom in der Trommel gleichgerichtet.

Fig. 3 zeigt stark schematisiert die Luftführung in der Stirnwand 14 der Vorrichtung. Über luftdicht aneinander koppelbare Stutzen 92 des Gehäuseteils 12 und Stutzen 93 der Stirnwand 14 sind die Strömungskanäle 94, 95 des Gehäuseteils 12 und der Stirnwand 14 miteinander verbindbar. In der Stirnwand 14 wird die Luft in Pfeilrichtung 96, 97 geführt. Die Luft strömt in Längsrichtung (axial) der Strömungskanäle 94, 95 und gelangt über den Zuströmkanal 98 in den Verteilerkanal 54. Dabei sind zumindest der Zuströmkanal 98, teilweise aber auch die Strömungskanäle 94, 95 derart ausgebildet, daß sich eine laminare Luftströmung ausbilden kann.

Hierzu sind sämtliche Umlenkzonen mit einem großen Radius versehen, damit die Luftströmung gleichmäßig umgelenkt wird und damit keine sprunghaften und nennenswerten Querschnittsveränderungen in den Strömungskanälen 94, 95 bzw. dem Zuströmkanal 98 auftreten. An der Stelle, an der die Strömungskanäle 94, 95 zusammentreffen, ist ein Strömungsleitelement 100 vorgesehen um die Luftströmung gleichmäßig und laminar umzulenken.

Die Strömungskanäle 94, 95 sind oberhalb der Trommelöffnung 52 angeordnet, so daß der die Strömungskanäle 94, 95 mit dem Verteilerkanal 54 verbindende Zuströmkanal 98 stellenweise senkrecht nach oben angeordnet ist. Damit wird verhindert, daß beim Reinigen der Trommel 48, des Verteilerkanal 54 und/oder der Sprühvorrichtung 22 Spritzwasser oder andere unerwünschte Substanzen in den Strömungskanal gelangen.

Die im Randbereich der Stirnwand 14 angeordneten Stutzen 92 sind über einen Druckausgleichskanal miteinander verbunden. Über die Stutzen 92 des Gehäuseteils 12 in die Stutzen 93 der Stirnwand 14 einströmende Luft kann sowohl in Pfeilrichtung 96 wie auch in Pfeilrichtung 97 strömen.

## Patentansprüche

1. Vorrichtung, insbesondere für die Filmlackierung und/oder die Zuckerdragierung, mit einer ein Überzugsgut aufnehmenden rotierbaren Trommel, deren Innenraum über einen Sprühdüsenträger einem Fluidstrom aussetzbar ist, und mit wenigstens einem zur Führung eines Luftstromes bis in den Innenraum der Trommel vorgesehenen Verteilerkanal, der als ein länglicher, den Luftstrom führender Hohlkörper ausgeführt ist, und der sich über etwa ein Fünftel bis ein Drittel, vorzugsweise ein Viertel, des Trommelumfanges erstreckt, und daß der Verteilerkanal (54) auf nahezu der gesamten Fläche seiner dem Überzugsgut zugewandten Seite (60) Luftauslaßöffnung (64) aufweist, wobei die Trommel zum Abführen der Gasphase abschnittsweise perforiert ist,
**dadurch gekennzeichnet,**
**daß** die dem Überzugsgut zugewandte Seite (60) des Verteilerkanales (64) konkav ausgebildet ist, daß sich der Verteilerkanal (54) nahezu über die gesamte axiale Länge der Trommel erstreckt, und daß der Sprühdüsenträger sich von der Trommelöffnung (52) bis nahe der der Trommelöffnung (52) gegenüberliegenden Trommelwand (56) erstreckt, wobei am Sprühdüsenträger Öffnungen für mehrere Düsen vorgesehen sind.

2. Vorrichtung nach Anspruch 1, **dadurch gekennzeichnet, daß** die dem Überzugsgut zugewandte Seite (60) des Verteilerkanales (54) etwa dieselbe Größe aufweist, wie die vom Überzugsgut eingenommene Fläche im Gutbett (58).

3. Vorrichtung nach wenigstens einem der Ansprüche 1 bis 2, **dadurch gekennzeichnet, daß** der im wesentlichen über dem Sprühdüsenträger (32) angeordnete Verteilerkanal (54) dem Gutbett (58) gegenüberliegendend angeordnet ist.

4. Vorrichtung nach wenigstens einem der Ansprüche 1 bis 3, **dadurch gekennzeichnet, daß** die Luftaustrittsöffnungen (64) so groß ausgelegt sind, daß die Luft aus dem Verteilerkanal (54) schleichend austritt.

5. Vorrichtung nach wenigstens einem der Ansprüche 1 bis 4, **dadurch gekennzeichnet, daß** im Inneren des Verteilerkanales (54) Leitbleche (66) zur Umlenkung eines Teils des Luftstromes angebracht sind.

6. Vorrichtung nach Anspruch 5, **dadurch gekennzeichnet, daß** die Leitbleche (66) mit zunehmender Entfernung von der Trommelöffnung (52) immer größer werden.

7. Vorrichtung nach wenigstens einem der Ansprüche 1 bis 6, **dadurch gekennzeichnet, daß** der Verteilerkanal (54) auf seiner dem Überzugsgut zugewandten Seite (60) als Siebblech (62) ausgeführt ist.

8. Vorrichtung nach Anspruch 7, **dadurch gekennzeichnet, daß** die Luftauslaßöffnungen (64) des Siebbleches (62) einen Durchmesser von 0,5 mm bis 5 mm, vorzugsweise 1,5 mm, aufweisen.

9. Vorrichtung nach wenigstens einem der Ansprüche 1 bis 8, **dadurch gekennzeichnet, daß** sich der Öffnungsquerschnitt der Luftauslaßöffnungen (64) mit zunehmender Entfernung von der Trommelöffnung (52) vergrößert.

10. Vorrichtung nach Anspruch 9, **dadurch gekennzeichnet, daß** die Luftaustrittsöffnungen (64) als Längsschlitz oder als Längsschlitze ausgeführt sind, die sich mit zunehmender Entfernung von der Trommelöffnung (52) verbreitern.

11. Vorrichtung nach Anspruch 9, **dadurch gekennzeichnet, daß** sich die Anzahl der Luftaustrittsöffnungen (64) mit zunehmender Entfernung von der Trommelöffnung (52) erhöht.

12. Vorrichtung nach wenigstens einem der Ansprüche 1 bis 11, **dadurch gekennzeichnet, daß** oberhalb der Trommelöffnung (52) angeordnete Strömungskanäle (94, 95) über einen Zuströmkanal (98) mit dem Verteilerkanal (54) verbunden sind.

13. Vorrichtung nach wenigstens einem der Ansprüche 1 bis 12, **dadurch gekennzeichnet, daß** die Strömungskanäle (94, 95) und/oder der Zuströmkanal (98) an nahezu jeder Stelle einen im wesentlichen gleichen Strömungsquerschnitt aufweisen.

## Claims

1. Device, in particular for coating and/or sugar-coating, comprising a rotary drum accommodating the material to be coated, whose interior can be exposed to a fluid flow via a spray nozzle carrier, and comprising at least one distributing channel provided for guiding an airflow into the interior of the drum which is designed as longitudinal hollow body guiding the air flow, and extends over approximately one fifth or one third, preferably a quarter, of the drum circumference, and the distributing channel (54) has air outlet openings (64) on almost the entire surface of its side (60) facing the material to be coated, wherein sections of the drum are perforated for discharging the gaseous phase, **characterized in that**
the side (60) of the distributing channel (64) facing the material to be coated, has a concave shape, the distributing channel (54) extends almost over the entire axial length of the drum, and the spray nozzle carrier extends from the drum opening (52) to the vicinity of the drum wall (56) opposite to the drum opening (52), wherein the spray nozzle carrier has openings for several nozzles.

2. Device according to claim 1, **characterized in that** the side (60) of the distributing channel (54) facing the material to be coated has approximately the same size as the area in the material bed (58) taken by the material to be coated.

3. Device according to at least one of the claims 1 to 2, **characterized in that** the distributing channel (54) which is disposed substantially above the spray nozzle carrier (32) is disposed opposite to the material bed (58).

4. Device according to at least one of the claims 1 through 3, **characterized in that** the air outlet openings (64) have a size which permits gradual escape of the air from the distributing channel (54).

5. Device according to at least one of the claims 1 through 4, **characterized in that** guiding plates (66) are disposed in the inside of the distributing channel (54) for deflecting part of the air flow.

6. Device according to claim 5, **characterized in that** the size of the guiding plates (66) increases with increased distance from the drum opening (52).

7. Device according to at least one of the claims 1 through 6, **characterized in that** the distributing channel (54) is designed as a sieve plate (62) on its side (60) facing the material to be coated.

8. Device according to claim 7, **characterized in that** the air outlet openings (64) of the sieve plate (62) have a diameter between 0.5mm and 5mm, preferably 1.5mm.

9. Device according to at least one of the claims 1 through 8, **characterized in that** the opening cross-section of the air outlet openings (64) increases with increasing distance from the drum opening (52).

10. Device according to claim 9, **characterized in that** the air outlet openings (64) are designed as longitudinal slot or longitudinal slots which broaden with increasing distance from the drum opening (52).

11. Device according to claim 9, **characterized in that** the number of air outlet openings (64) increases with increasing distance from the drum opening (52).

12. Device according to at least one of the claims 1 through 11, **characterized in that** flow channels (94, 95) which are disposed above the drum opening (52) are connected to the distributing channel (54) via a feed channel (98).

13. Device according to at least one of the claims 1 through 12, **characterized in that** the flow channels (94,95) and/or the feed channel (98) have at almost any location substantially identical flow cross-sections.

## Revendications

1. Appareil, en particulier pour le laquage au moyen d'un film et/ou pour la dragéification au sucre, comprenant un tambour rotatif qui reçoit une matière d'enrobage, dont le volume intérieur peut être exposé à un écoulement de fluide au moyen d'un porte-buses de pulvérisation, et comprenant au moins un canal de répartition prévu afin de guider un écoulement d'air jusque dans le volume intérieur du tambour, ledit canal étant réalisé sous forme d'un corps creux allongé qui guide l'écoulement d'air, et qui s'étend sur approximativement un cinquième à un tiers, et de préférence un quart, de la périphérie du tambour, et dans lequel le canal de répartition (54) comporte une ouverture de sortie d'air (64) sur pratiquement la totalité de la surface de son côté (60) tourné vers la matière d'enrobage, et ledit tambour étant perforé par secteurs pour l'évacuation de la phase gazeuse,
**caractérisé en ce que** le côté (60) du canal de répartition (54) tourné vers la matière d'enrobage est réalisé sous forme concave, **en ce que** le canal de répartition (54) s'étend pratiquement sur la totalité de la longueur axiale du tambour, **en ce que** le porte-buses de pulvérisation s'étend depuis l'ouverture (52) du tambour jusqu'à proximité de la paroi du tambour (56) à l'opposé de l'ouverture (52) du tambour, et **en ce que** des ouvertures pour plusieurs buses sont prévues sur le porte-buses de pulvérisation.

2. Appareil selon la revendication une, **caractérisé en ce que** le côté (60) du canal de répartition (54) tourné vers la matière d'enrobage présente approximativement la même taille que la surface occupée par la matière d'enrobage dans le lit de matière (58).

3. Appareil selon l'une ou l'autre des revendications 1 et 2, **caractérisé en ce que** le canal de répartition (54), agencé sensiblement au-dessus du porte-buses de pulvérisation (32), est agencé à l'opposé du lit de matière (58).

4. Appareil selon l'une au moins des revendications 1 à 3, **caractérisé en ce que** les ouvertures de sortie d'air (64) sont réalisées d'une taille suffisamment grande pour que l'air sorte lentement hors du canal de répartition (54).

5. Appareil selon l'une au moins des revendications 1 à 4, **caractérisé en ce que** des tôles de guidage (66) pour faire dévier une partie de l'écoulement d'air sont montées à l'intérieur du canal de répartition (54).

6. Appareil selon la revendication 5, **caractérisé en ce que** les tôles de guidage (66) deviennent de plus en plus grandes au fur et à mesure de l'éloignement depuis l'ouverture du tambour (52).

7. Appareil selon l'une au moins des revendications 1 à 6, **caractérisé en ce que** le canal de répartition (54) est réalisé sous forme de tôle-tamis (62) sur son côté (60) tourné vers la matière d'enrobage.

8. Appareil selon la revendication 7, **caractérisé en ce que** les ouvertures de sortie d'air (64) de la tôle-tamis (62) ont un diamètre de 0,5 à 5 mm, de préférence 1,5 mm.

9. Appareil selon l'une au moins des revendications 1 à 8, **caractérisé en ce que** la section d'ouverture des ouvertures de sortie d'air (64) augmente au fur et à mesure de l'éloignement depuis l'ouverture du tambour (52).

10. Appareil selon la revendication 9, **caractérisé en ce que** les ouvertures de sortie d'air (64) sont réalisées sous la forme d'une ou plusieurs fentes longitudinales, lesquelles s'élargissent au fur et à mesure de l'éloignement depuis l'ouverture du tambour (52).

11. Appareil selon la revendication 9, **caractérisé en ce que** le nombre des ouvertures de sortie d'air (64) augmente au fur et à mesure de l'éloignement depuis l'ouverture du tambour (52).

12. Appareil selon l'une au moins des revendications 1 à 11, **caractérisé en ce que** des canaux d'écoulement (94, 95) agencés au-dessus de l'ouverture du tambour (52) sont reliés au canal de répartition (54) via un canal d'accès (98).

13. Appareil selon l'une au moins des revendications 1 à 12, **caractérisé en ce que** les canaux d'écoulement (94, 95) et/ou le canal d'accès (98) présente(nt) une section d'écoulement sensiblement égale pratiquement à tout emplacement.
